# EUROPEAN PATENT APPLICATION

(11) **EP 2 187 322 A1**
(43) Date of publication of application: **19.05.2010**
(21) Application number: 09175646.0
(22) Date of filing: 11.11.2009
(51) Int. Cl.: G06F 17/30

(54) **Apparatus and method of albuming content**

(30) Priority: 11.11.2008 KR 20080111493
(71) Applicant: Samsung Electronics Co., Ltd., Suwon-si, Gyeonggi-do 442-743 (KR)
(72) Inventor: Kim, Se-hyun, Daejeon (KR)
(74) Representative: Van Someren, Petronella F. H. M.

(57) **Abstract**

A content albuming apparatus to automatically album content includes a storage unit to store user information and content, a clustering information generation unit to generate event-baeed clustering information to cluster the content using the user information, and a clustering unit to cluster the content according to the event-based clustering information. Accordingly, it is possible to automatically album content with greater precision and user satisfaction.

## Description

This application claims priority under 35 D.S.C. § 119 (a) from Korean Patent Application No. 10-2008-0111493, filed on November 11, 2008, in the Korean Intellectual Property Office, the disclosure of which is incorporated herein by reference in its entirety.

The present general inventive concept relates to an apparatus and method of albuming content. More particularly, the present general inventive concept relates to an apparatus and method of automatically albuming content.

As digital devices and the Internet have become widespread, the use of digital multimedia content has also exponentially increased.

Due to easy transmission and sharing of content, a vast amount of multimedia content is generated each day, and people can easily access multimedia content all the time, every place. In addition, wide distribution of miniaturized highly efficient digital cameras and camcorders enable people to record and edit their everyday life on digital pictures or digital movies.

According to the exponential growth of multimedia content, most people feel the need to album digital picture and digital movie content for effective management. However, the amount of time and effort needed to group and label a large amount of content one by one causes inconvenience. In order to address such a problem, many methods for automatically albuming content have been introduced but do not satisfy the demand of users in aspects of precision and convenience.

For example, a user may wish to classify and store pictures according to an event or a category, but while semantic concepts such as an "event" and a "category" are high level semantic concepts which can be recognized by people, so it is difficult to automatically extract such high level semantic concepts by machine. This is because there is a semantic gap between a low level semantic concept which can be recognized by a computer and a high level semantic concept which can be recognized by people, such as an event or a category. Therefore, it is difficult to give the user a satisfactory picture indexing result when automatically albuming content.

The present general inventive concept provides an apparatus and method of albuming content using user information.

Additional features and utilities of the present general inventive concept will be set forth in part in the description which follows and, in part, will be obvious from the description, or may be learned by practice of the general inventive concept.

Exemplary embodiments of the present general inventive concept may be achieved by providing a content albuming apparatus including a storage unit to store user information and content, a clustering information generation unit to generate event-based clustering information to cluster the content into an album using the user information, and a clustering unit to cluster the content according to the event-based clustering information.

The content albuming apparatus may further include an albuming information storage unit to store albuming information including the event-based clustering information.

The content albuming apparatus may further include an identifier generation unit to generate an identifier for the album, wherein the identifier is included in the albuming information.

The clustering unit may perform clustering based on content-based clustering information including at least one of information regarding a generation time or copying time of the content, information regarding a situation in which the content has been generated, and information regarding a focus of the content.

The content albuming apparatus may further include a reference image storage unit to store at least one of a reference image, a reference background image, and a template for an event, wherein the identifier generation unit generates at least one of a cover and a name of the album based on the event-based clustering information and the reference image for the event.

The identifier generation unit may select the background image or the template to be used for the cover of the album based on the reference background image or the reference template for the event.

The content albuming apparatus may further include a terminology dictionary storage unit to store event-related terminology to cluster the content, wherein the clustering information generation unit generates the event-based clustering information based on the event-related terminology.

The content albuming apparatus may further include a user interface unit, wherein the clustering information generation unit generates the event-based clustering information based on event-related terminology which is input through the user interface unit.

The clustering information generation unit may update the event-based clustering information to correspond to the changed user information if the user information is changed.

The user information may include at least one of information regarding a user's schedule, information regarding the user's personal matters, and information regarding holidays.

The content may include at least one of digital pictures and digital movies.

The cover of the album may include at least one of a digital picture and an image from a digital movie.

Exemplary embodiments of the present general inventive concept may also be achieved by providing a method of albuming content, the method including storing user information and content, generating event-based clustering information to cluster the content using the user information, and clustering the content into an album according to the event-based clustering information.

The method may further include storing albuming information including the event-based clustering information.

The method may further include generating an identifier for an album, wherein the identifier is included in the albuming information.

Clustering the content may further include clustering the content based on content-based clustering information including at least one of information regarding a generation time or copying time of the content, information regarding a situation in which the content has been generated, and information regarding a focus of the content.

The method may further include storing at least one of a reference image, a reference background image, and a template for an event, wherein generating the identifier may further comprise generating at least one of a cover and a name of the album based on the event-based clustering information and the reference image for the event.

Generating the cover of the album may include selecting the background image or the template to be used for the cover of the album based on the reference background image or the reference template for the event.

The method may further include storing event-related terminology to cluster the content, wherein generating event-based clustering information may further comprise generating the event-based clustering information based on the event-related terminology.

Generating event-based clustering information may include generating the event-based clustering information based on event-related terminology which is input by a user.

The method may further include updating the event-based clustering information to correspond to the changed user information if the user information is changed.

The user information may include at least one of information regarding a user's schedule, information regarding the user's personal matters, and information regarding holidays.

The content may include at least one of digital pictures and digital movies.

The cover of the album may include at least one digital picture and digital movie.

Exemplary embodiments of the present general inventive concept may also be achieved by providing a computer-readable medium having executable code stored thereon to perform a method of albuming content, the method including storing user information and content, generating event-based clustering information to cluster the content using the user information, and clustering the content into an album according to the event-based clustering information.

These and/or other features and utilities of the present general inventive will become apparent and more readily appreciated from the following description of the exemplary embodiments, taken in conjunction with the accompanying drawings of which:
FIG. 1 is a schematic block diagram illustrating a configuration of a content albuming apparatus according to an exemplary embodiment of the present general inventive concept;
FIG. 2 is a schematic block diagram illustrating a detailed configuration of the exemplary content albuming apparatus of FIG. 1;
FIGS. 3A to 3D illustrate diverse kinds of data to be stored and used according to an exemplary embodiment of the present general inventive concept;
FIG. 4 illustrates a method of generating event-based clustering information according to an exemplary embodiment of the present general inventive concept;
FIGS. 5A to 5C illustrate a method of clustering content according to an exemplary embodiment of the present general inventive concept;
FIG. 6 illustrates the method of albuming content as illustrated in FIGS. 5A to 5C in a different manner according to an exemplary embodiment of the present general inventive concept;
FIG. 7 illustrates a method of generating an album identifier according to an exemplary embodiment of the present general inventive concept;
FIG. 8 illustrates diverse examples of the name of an album to be generated according to an exemplary embodiment of the present general inventive concept;
FIG. 9 is a flow chart illustrating a method of albuming content according to an exemplary embodiment of the present general inventive concept;
FIG. 10 is a flow chart illustrating the method of albuming content as illustrated in FIG. 9 in greater detail; and
FIG. 11 is a schematic block diagram illustrating an electronic apparatus according to an exemplary embodiment of the present general inventive concept.

Reference will now be made in detail to exemplary embodiments of the present general inventive concept, examples of which are illustrated in the accompanying drawings, wherein like reference numerals refer to like elements throughout. The exemplary embodiments are described below in order to explain the present general inventive concept by referring to the figures.

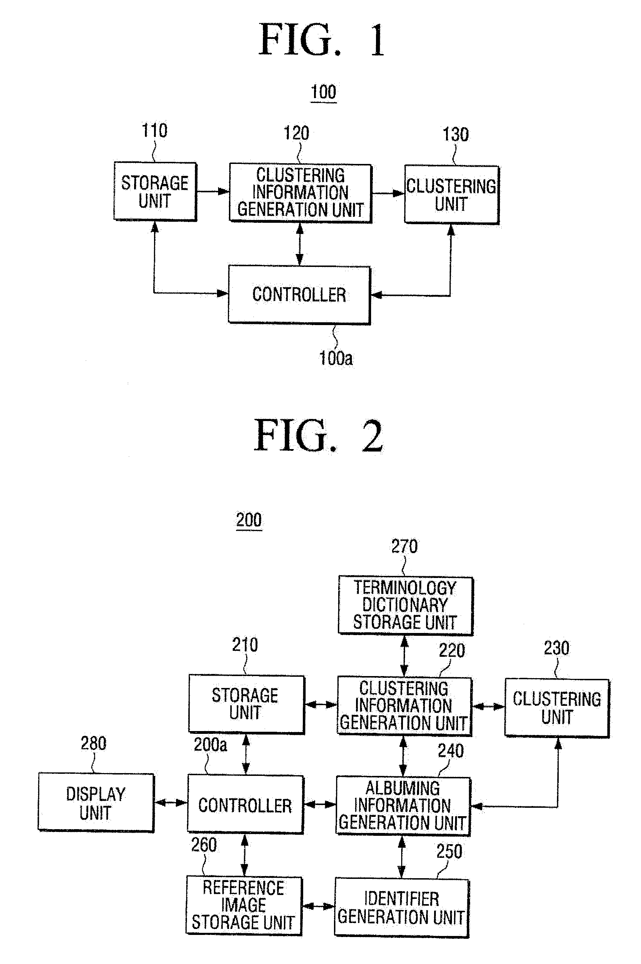

FIG. 1 is a schematic block diagram illustrating a configuration of a content albuming apparatus according to an exemplary embodiment of the present general inventive concept. As illustrated in FIG. 1, the content albuming apparatus 100 may include a storage unit 110, a clustering information generation unit 120, and a clustering unit 130.

The content albuming apparatus 100 may be a multimedia device, such as a digital camera, a camcorder, a computer, and/or a portable terminal, which can generate, store, and use multimedia content, a module which can be mounted on the foregoing devices, or an external device which can be attached to the foregoing devices.

The storage unit 110 can store user information and content. User information may include the user's personal information, schedule information, and holiday information, which can be obtained, for example, from a Personal Information Management System (PIMPS) such as a computer or a portable terminal. For example, the user's personal information may include the user's birthday, wedding anniversary, dates of employment, spouse's birthday, and parents' birthdays. The user's schedule information may include, for example, dates for weddings or other special occasions, seminars, travel, meetings, and appointments. Holiday information may include national holidays such as Thanksgiving and Independence Day, as well as days off such as Saturday and Sunday. This classification of the user information is merely an exemplary embodiment, and the present general inventive concept is not limited thereto. The classification of the user information may vary according to a user preference.

Content may be digital multimedia content such as digital pictures or digital movies.

The storage unit 110 may be an internal memory which is provided in the content albuming apparatus 100 or a portable memory which is externally mounted on the content albuming apparatus 100. The internal memory may be implemented, for example, as read-only memory (ROM), flash memory, random access memory (RAM), or the like. The portable memory may be implemented as a Compact Flash Card (CF), a Multimedia Card (MMC), a Secure Digital Card (3D), a Smart Media Card (SMC), a Memory Stick (MS), an XD picture card (XD), a mini SD card, a T-Flash card, an RS-MMC card, or the like. In addition, an external device, such as an external hard drive or other external memory and/or a memory accessible over a network, such as a networked memory device or an external website which can provide and store data may function as the storage unit 110, as the case may be.

The clustering information generation unit 120 generates event-based clustering information so as to cluster content using the user information stored in the storage unit 110. For example, the clustering information generation unit 120 can extract information regarding an event to cluster the content from the user information, and can generate event-based clustering information, for example, regarding the name, time, and place of the event.

The clustering unit 130 can cluster content based on the event-based clustering information generated by the clustering information generation unit 120. In addition, the clustering unit 130 may cluster content based on content-based clustering information, which can include at least one of information regarding the generation time or copying time of the content, which can be included in metadata of the content, information regarding the situation in which the content has been generated, which can be obtained by analyzing the content, and information regarding the focus of the content, such as a person, place, object, etc. in the content, other than the event-based clustering information.

The content albuming apparatus 100 may also include a controller 100a to control the above-described operations of the storage unit 110, the clustering information generation unit 120, and the clustering unit 130. The content albuming apparatus 100 may also include an input unit (not illustrated) to permit the input of commands and information by a user. The input unit can include buttons, dials, sliders, a touch screen, and other appropriate user input devices. The input unit may communicate with the controller. The content albuming apparatus 100 may also include a display unit (not illustrated) to display content and information related to the operations of the content albuming apparatus 100. The display unit may, for example, be an external display such as an LCD or CRT display, or it can be a display integral to the content albuming apparatus 100. In addition, the input unit and the display unit may be implemented together, for examples, as a touch screen which can both display information and receive an input.

FIG. 2 is a schematic block diagram illustrating a detailed configuration of the content albuming apparatus 200 of FIG. 1. Referring to FIG. 2, the content albuming apparatus 200 may include a storage unit 210, a clustering information generation unit 220, a clustering unit 230, an albuming information storage unit 240, an identifier generation unit 250, a reference image storage unit 260, a terminology dictionary storage unit 270, and a display unit 280. The content albuming apparatus 200 may include a controller 200a to control the operations of the storage unit 210, the clustering information generation unit 220, the clustering unit 230, the albuming information storage unit 240, the identifier generation unit 250, the reference image storage unit 260, the terminology dictionary storage unit 270, and the display unit 280.

The storage unit 210 can store user information and content. User information may include the user's personal information, schedule information, and holiday information, which can be obtained, for example, from a Personal Information Management System (PIMS) such as a computer and/or a portable terminal. For example, the user's personal information may include the user's birthday, wedding anniversary, dates of employments, spouse's birthday, and parents' birthdays. The user's schedule information may include, for example, dates for weddings and other special occasions, seminars, travel, meetings, and appointments. Holiday information may include national holidays such as Thanksgiving and Independence Day, as well as days off such as Saturday and Sunday.

Content may be digital multimedia content such as digital pictures or digital movies.

The storage unit 210 may be internal memory which is provided in the content albuming apparatus 200 or portable memory which is externally mounted on the content albuming apparatus 200. The internal memory may be implemented, for example, as read-only memory (ROM), flash memory, random access memory, (RAM), or the like. The portable memory may be implemented, for example, as a Compact Flash Card (CF), a Multimedia Card (MMC), a Secure Digital Card (SD), a Smart Media Card (SMC), a Memory Stick (MS), an XD picture card (XD), a mini SD card, a T-Flash card, an RS-MMC card, or the like. In addition, an external device, such as an external hard drive or other external memory, and/or a memory accessible over a network, such as a networked memory device or an external website which can provide and store data may function as the storage unit 210, as the case may be.

The clustering information generation unit 220 can generate event-based clustering information so as to cluster content using the user information stored in the storage unit 210. For example, the clustering information generation unit 220 can extract information regarding an event to cluster the content from the user information, appropriately classify the extracted information, and generate event-based clustering information regarding, for example, the name, time, and place of the event.

The terminology dictionary storage unit 270 can store terminology regarding the event to cluster the content. In an exemplary embodiment, the terminology dictionary storage unit 270 is a database including reference terminology which is used to analyze the meaning of the user information. For example, the terminology dictionary storage unit 270 may store schedule terminology, anniversary terminology, and holiday terminology.

In an exemplary embodiment, the clustering information generation unit 220 can generate the event-based clustering information based on the terminology regarding the event stored in the terminology dictionary storage unit 270.

The albuming information storage unit 240 can store albuming information to express clustered content as an album. That is, the albuming information storage unit 240 can store the event-based clustering information generated by the clustering information generation unit 220 as well as the content-based clustering information. In addition, the albuming information storage unit 240 can store information to album the content such as an album identifier generated by the identifier generation unit 250.

The clustering unit 230 can cluster content based on the event-based clustering information generated by the clustering information generation unit 220. In addition, the clustering unit 230 may cluster content based on at least one of information regarding the generation time or copying time of the content, which can be included in metadata of the content, information regarding a situation (such as a place, a background, composition, or the like) in which the content has been generated, which can be obtained by analyzing the content, and information regarding the focus of the content, such as a person, place, object, etc. in the content, other than the event-based clustering information. For convenience of explanation, the information regarding the time, a situation, and the focus of the content which can be obtained from the content is referred to hereinafter as "content-based clustering information." The content-based clustering information may be stored and managed in the albuming information storage unit 240 or in a separate database.

According to an exemplary embodiment of the present general inventive concept, a method of the clustering unit 230 clustering content (for example, picture data) using information regarding a time and place is described.

The clustering unit 230 can arrange picture data using time information, which can be extracted from metadata (such as exchangeable image file format (EXIF) information) of the picture data. In addition, if there is Global Positioning System (GPS) information indicating a place in which the picture was taken other than the time information regarding, the GPS information can be used together with the time information. The clustering unit 230 can extract information regarding a boundary between pictures using the albuming information stored in the albuming information storage unit 240, the time information, and the GPS information, and can determine whether an interval between pictures is a boundary between albums.

In order to determine the boundary between the albums according to the time, a time boundary threshold value can first be determined. For example, a threshold value to be used to extract the time boundary can be determined using albuming information manually divided by a user. In this case, a time interval between albums, a time interval of each album, and/or the number of pictures in each album may be used.

If the threshold value to extract the time boundary is determined, a time interval between two successive pictures is compared with the threshold value. If the time interval between the two successive pictures is lower than the threshold value, the two successive pictures can be determined to belong to the same group. If a time interval between two successive pictures is higher than the threshold value, the two successive pictures can be determined to not belong to the same group.

Alternatively, if the information regarding a place in which the picture was taken is used, it is determined whether places in which two successive pictures were taken are the same. If the places in which the two successive pictures were taken are the same, the two successive pictures can be determined to belong to the same group. If the places in which the two successive pictures were taken are not the same, a boundary between groups can be determined by comparing a time boundary between the pictures using the time information. The pictures can be clustered by applying the aforementioned process to all of the pictures.

A cover or title of an album may be automatically generated using identifier information from among the albuming information. Information regarding diverse situations (such as background, composition, or the like) in which a picture was taken, and information regarding the focus of the picture, other than the time information and the place information, can be used to extract the boundary between the pictures, as the case may be.

If the pictures are grouped according to the time information or the place information, the pictures can be grouped again using the event-based clustering information, that is, the name, time, and/or place of the event, generated by the clustering information generation unit 220. Following this process, clustering for albuming the pictures can be completed.

The identifier generation unit 250 can generate an identifier regarding an album. The identifier generation unit 250 can obtain a reference image for corresponding event information from the reference image storage unit 260 and can generate a cover of an album. The identifier generation unit 250 can select a background image and a template to be used for the cover of the album based on a reference background image for an event stored in the reference image storage unit 260. For example, the identifier generation unit 250 can select and combine a picture and a reference background image corresponding to a reference image of a corresponding event so as to generate the cover of the album. In addiction, the identifier generation unit 250 can generate the name of the album based on, for example, the name, place, and/or time of the event. The identifier can be included in the albuming information to express the clustered content as an album.

The identifier generation unit 250 can measure the similarity to a reference image for an event stored in the reference image storage unit 260, and can select the most similar image as a representative image so as to generate the cover of the album. In an exemplary embodiment, the identifier generation unit 250 may select a plurality of representative images so as to generate the cover of the album. The pre-stored reference image for an event indicates an image which represents the event and which can be generated by training, for example, by comparison with image which have been previously selected as a representative image. In addition, a reference background image for an event and a template may be used as a background of a cover of an album. Furthermore, the name of the album may be generated by taking into consideration information regarding the name, time, and place of the event, or the central focus of the event.

If user information stored in the storage unit 210 is changed, the clustering information generation unit 220 may update event-based clustering information which is to cluster the content and is stored in the storage unit 210 so as to correspond to the changed user information.

The content albuming apparatus 200 may include a user interface unit (not shown), so clustering information of content can be generated based on an event-related terminology input through the user interface unit. That is, the clustering information generation unit 220 may generate clustering information of content based on event-related terminology input through the user interface unit as well as event-related terminology stored in the terminology dictionary storage unit 270.

The content albuming apparatus 200 may include a display unit 280. The display unit 280 may be installed on an outside or may be disposed outside of the content albuming apparatus 200 to display information to a user. Controller 200a may be connected to and may control the operations of the display unit 280 to display, for example, a user interface as described above.

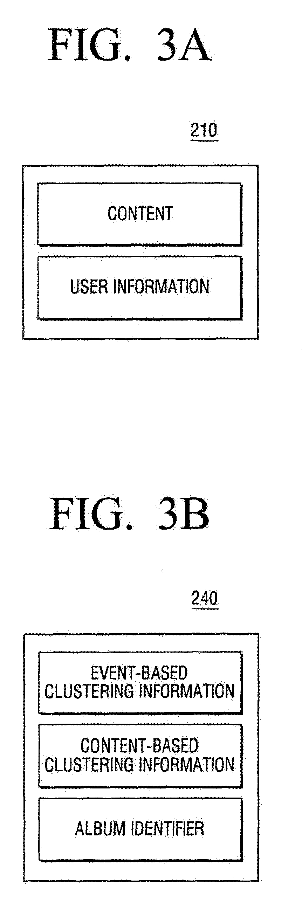

FIGS. 3A to 3D illustrate diverse kinds of data which can be stored and used according to an exemplary embodiment of the present general inventive concept.

Referring to FIG. 3A, the storage unit 210 may store content such as digital pictures for albuming, and digital movies, and user information such as information regarding the user's personal information, schedule, and holidays.

Referring to FIG. 3B, the albuming information storage unit 240 may store event-based clustering information regarding the name, time, place, and central focus of the event, which are generated based on the user information stored in the storage unit 210, content-based clustering information regarding a content generation time, a content generation place, a content generation situation, and a person who generated the content, which can be extracted from the content, and an album identifier regarding a cover and the name of an album, which can be generated based on the event-based clustering information and a reference image for the event.

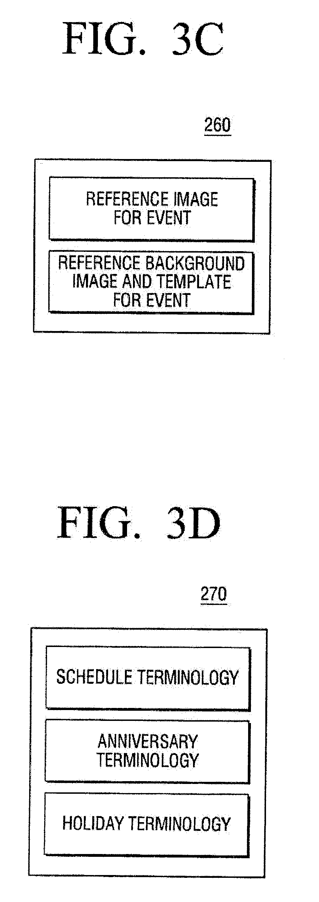

Referring to FIG. 3C, the reference image storage unit 260 may store a reference image, a reference background image, and a template for an event, which can be generated by training.

Referring to FIG. 3D, the terminology dictionary storage unit 270 may store diverse event terminology to generate event-based clustering information based on the user information, that is, may store schedule terminology, anniversary terminology, and holiday terminology.

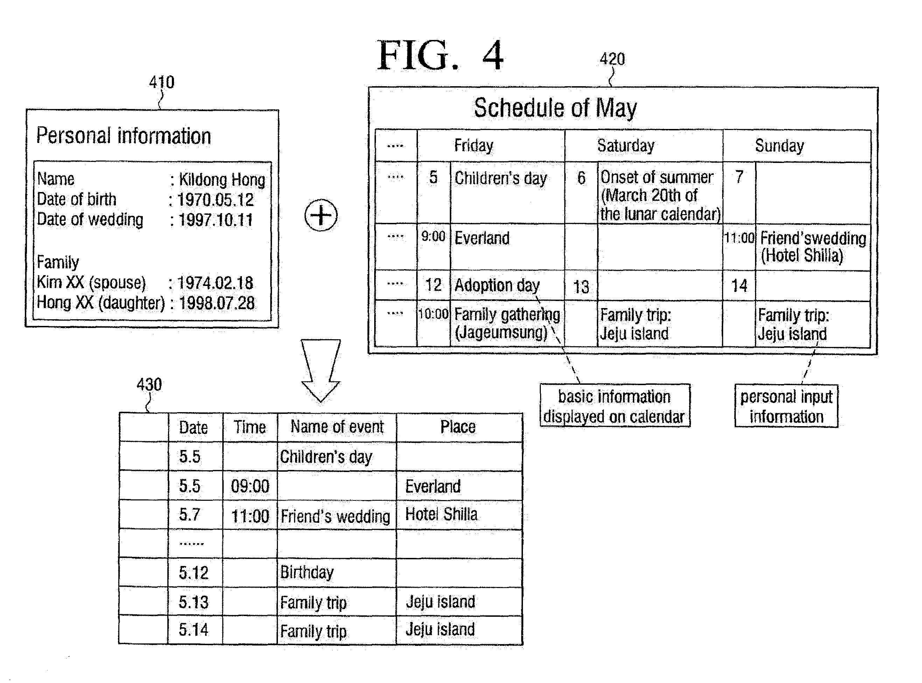

FIG. 4 illustrates a method of generating event-based clustering information according to an exemplary embodiment of the present general inventive concept.

Referring to FIG. 4, event-based clustering information 430 for clustering content may be generated based on personal information 410 such as the user's birthday, wedding anniversary, and family member's birthdays, and from the user's schedule information 420 such as a family gathering and/or family trip, and holiday information, which can also include non-U.S. holidays such as Children's Day. As illustrated in FIG. 4, generated event-based clustering information 430 may include an event date of May 7, an event time of 11:00, the event name of a wedding day, and the event place of the hotel Shilla.

Referring to FIGS. 2 and 4, the controller 200a can generate a signal and send the signal to the display unit 280 to display an image representative of the event-based clustering information to display the image to a user. Through the image displayed on the display unit 280, a user may review the event-based clustering information and/or the content, and in addition a user may also select, change or modify the content and/or the event-based clustering information.

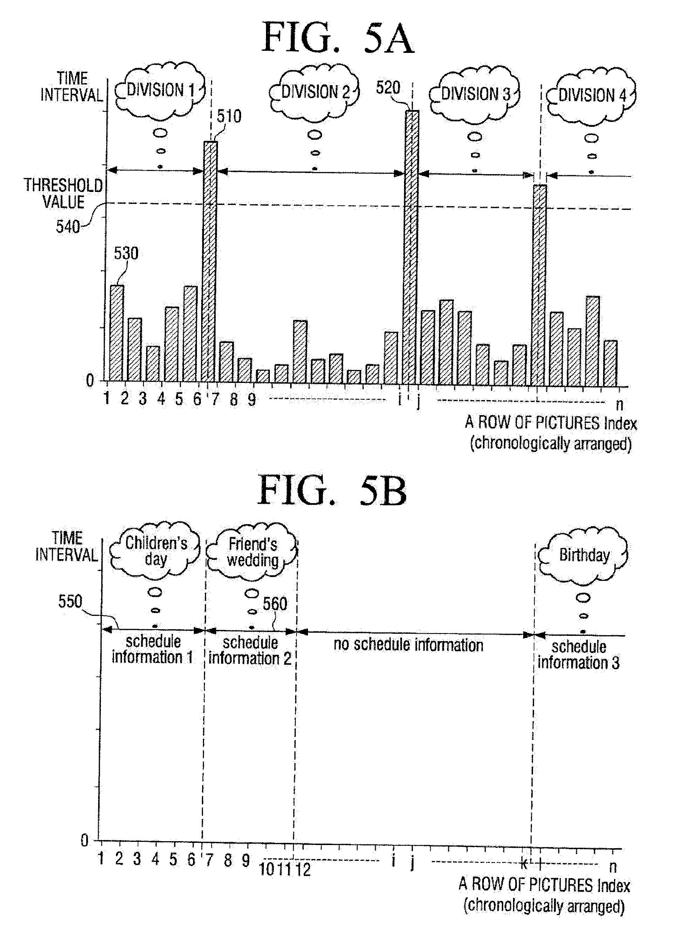

FIGS. 5A to 5C illustrate a method of clustering content according to an exemplary embodiment of the present general inventive concept. For convenience of explanation, it is assumed that contents are pictures, but this is not intended as a limitation thereto, and content may include any multimedia content, including videos.

Referring to FIG. 5A, in an exemplary embodiment a row of pictures which are arranged in chronological order may be grouped based on a time interval threshold value 540. In FIG. 5A, pictures 1, 2, ..., and n indicate pictures which are arranged in chronological order, and the hatch marked bars indicate a time interval between pictures. As illustrated in FIG. 5A, if a time interval between two successive pictures is higher than the time interval threshold value, the two successive pictures are divided into different groups. For example, a time interval between two successive pictures can be compared with the time interval threshold value 540. If a time interval between two successive pictures (such as interval 530) is lower than the time interval threshold value 540, the two successive pictures 1 and 2 can be determined to belong to the same group. If a time interval between two successive pictures (such as interval 510) is higher than the time interval threshold value, the two successive pictures 6 and 7 can be determined to not belong to the same group.

Referring to FIG. 5B, a row of pictures which is arranged in chronological order may be grouped using event-based clustering information. That is, the row of pictures may be grouped recording to the name and time of an event. For example, the pictures 1-6 may be associated with the schedule information 550 of the name of a Korean holiday, Children's Day, and accordingly pictures 1-6 may be grouped together. In addition, pictures 7-11 may be associated with different schedule information 560, a friend's wedding, and accordingly pictures 7-11 may be grouped together, in a different group than pictures 1-6. Pictures 12-k, having no associated schedule information, may not be assigned to a group, or they may be grouped together into a group for pictures with no schedule information.

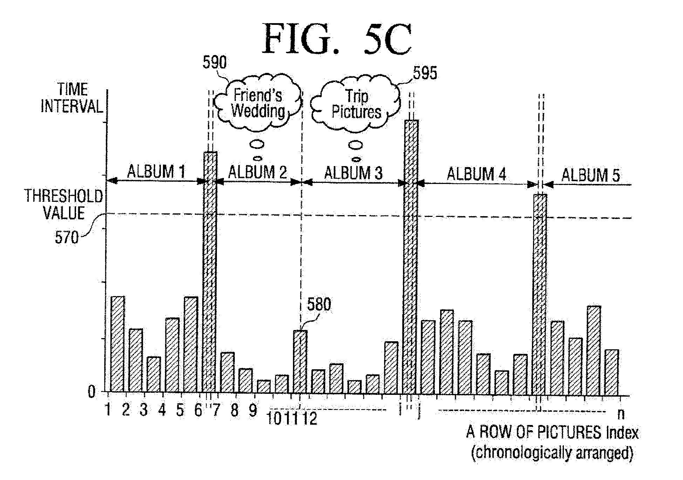

FIG. 5C illustrates a row of clustered pictures which is grouped by combination of the time-based division illustrated in FIG. 5A and the event-based division illustrated in FIG. 5B. As illustrated in FIG. 5C, a time interval 580 between the 11^{th} picture and the 12^{th} picture is lower than the time interval threshold value 570, but event information 590 of the 11^{th} picture is different from event information 595 of the 12^{th} picture, so the 11^{th} picture is grouped into Album 2 and the 12^{th} picture is grouped into Album 3.

Images representing information including the time interval threshold value, groups of pictures, time intervals between pictures, and the event-based clustering information, as described above, may be displayed on the display unit 280. The controller 200a can control the operation of the display unit 280 to display the images, and a user can review the images, and further can make selections, changes, and/or modifications to the information represented therein through the display unit 280.

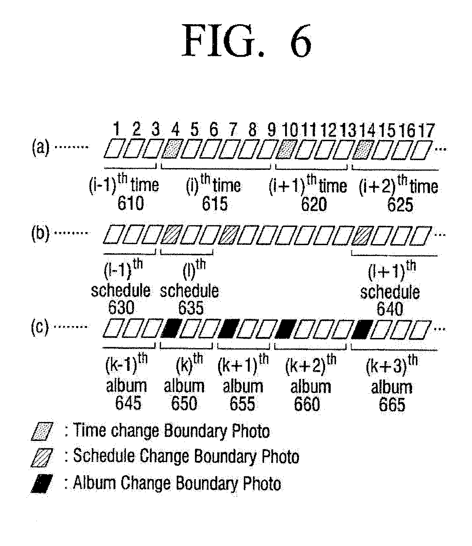

FIG. 6 illustrates a method of albuming content as illustrated in FIGS. 5A to 5C in a different manner.

Referring to (a) of FIG. 6, a row of pictures is divided into a plurality of groups 610-625 based on a time threshold value according to an exemplary embodiment of the present general inventive concept, as described above. Referring to (b) of FIG. 6, the row of pictures is divided into a plurality of groups 630-640 based on schedule information. Referring to (c) of FIG. 6, the row of pictures is divided into a plurality of albums based on division of the row of pictures in (a) and (b) of FIG. 6. As illustrated in FIG. 6, pictures 3 and 4 are associated with different time information and schedule information, so pictures 3 and 4 are grouped into different albums 645 and 650, with picture 4 being an album change boundary photo. Pictures 6 and 7 are associated with different schedule information, so pictures 6 and 7 are grouped into different albums 650 and 655, with picture 7 being an album change boundary photo. Also, pictures 9 and 10 are associated with no schedule information, but are associated with different time information 615 and 620. Accordingly, pictures 9 and 10 are grouped into different albums 655 and 660, with picture 10 being an album change boundary photo.

Images representing information including the pictures, the time information, the schedule information, and groups of pictures, as described above, may be displayed on the display unit 280. The controller 200a can control the operation of the display unit 280 to display the images, and a user can review the images, and further can make selections, changes, and/or modifications to the information represented therein through the display unit 280.

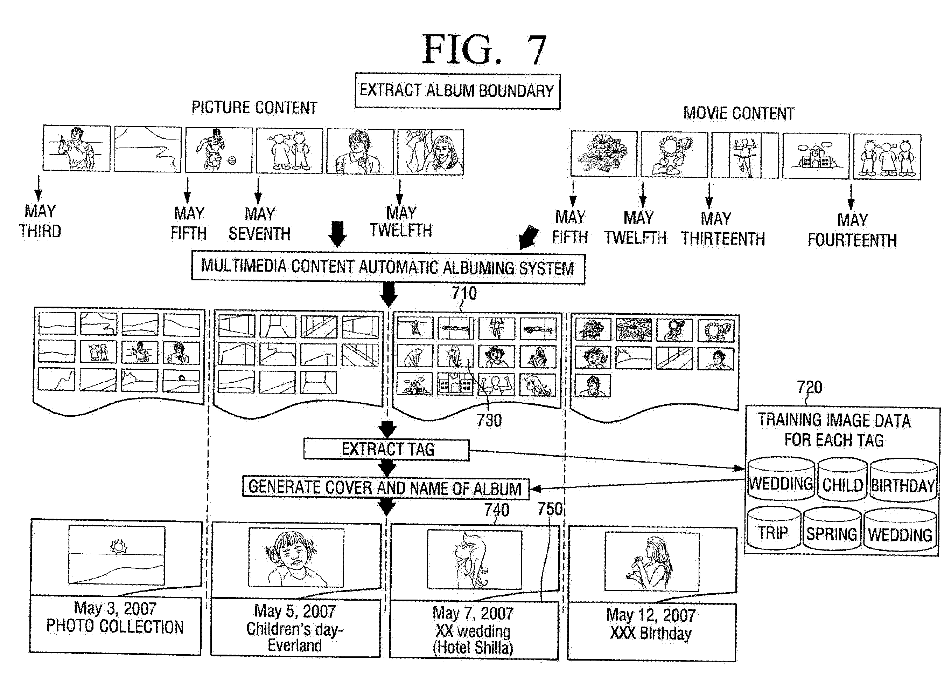

FIG. 7 illustrates a method of generating an album identifier according to an exemplary embodiment of the present general inventive concept.

Referring to FIG. 7, if a row of pictures is divided into a plurality of groups by the above-described methods, event-based clustering information of each album is compared with pre-stored reference image data, that is, training image data, so a picture having a high similarity can be generated as a cover of an album. In addition, the name of an album can be generated using the event-based clustering information and content-based clustering information. For example, for album 710, which can be associated with schedule information such as "May 7, Friend's Wedding, Hotel Shilla" (see FIG. 3), event-based clustering information can be compared with training image data 720 to select a picture 730 to be used as a cover 740 for the album 710. Additionally, a name of the album 750 can be generated from the event-based clustering information and the event-based clustering information. Although the above description refers to the use of a picture as a cover image, this is not intended as a limitation, and, for example, an image selected from a digital movie may also be used as an image for an album cover.

Images representing information including the content, event-based clustering information, the pre-stored reference image data, albums, tags, and the name of an album, as described above, may be displayed on the display unit 280. The controller 200a can control the operation of the display unit 280 to display the images, and a user can review the images, and further can make selections, changes, and/or modifications to the information represented therein through the display unit 280.

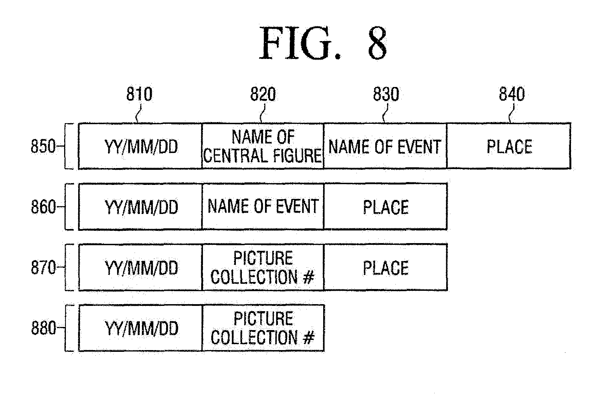

FIG. 8 illustrates diverse examples of the name of an album to be generated according to an exemplary embodiment of the present general inventive concept.

Referring to FIG. 8, the name of an album can be generated, for example, by a combination of the time (YY/MM/DD) 810, a central figure 820, the name of an event 830, and a place 840. That is, if an event is registered, the name of an album can be generated in the form of "time-central figure-name of event-place" 850, "time-name of event-place" 860, or the like. If an event is not registered, the name of an album can be generated in the form of "time-picture collections-place" 870, "time-picture collection#" 880, or the like. Thus, the name of an album can be generated by information associated with content regardless of the amount or type of associated information.

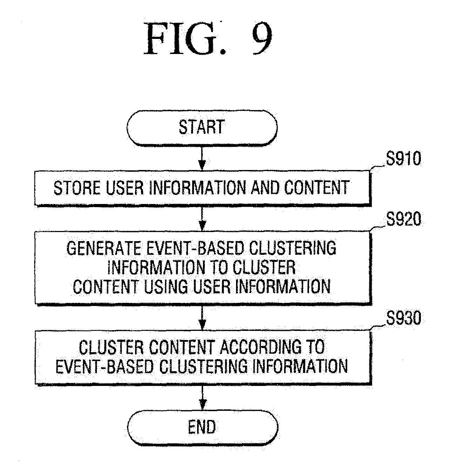

FIG. 9 is a flow chart illustrating a method of albuming content according to an exemplary embodiment of the present general inventive concept.

Referring to FIG. 9, in operation S910, if user information and content are stored, in operation S920, event-based clustering information to cluster the content is generated using the user information. The user information may include information regarding the user's schedule, personal matters, and holidays. The content may include digital pictures and digital movies.

The event-based clustering information may include the name, time, place, and central focus of an event.

In operation S930, the content is clustered according to the event-based clustering information. In this case, in operation S930, clustering can be performed based on content-based clustering information including at least one of information regarding the generation time or copying time of the content, information regarding the situation in which the content has been generated, and information regarding the focus of the content, other than the event-based clustering information.

In addition, albuming information to express the clustered content as an album can be stored. In this case, the albuming information may include the event-based clustering information, the content-based clustering information, and an identifier of the album.

Furthermore, in operation S920, the event-based clustering information can be generated based on pre-stored event-related terminology or event-related terminology input by the user. The event-related terminology may include schedule terminology, anniversary terminology, and holiday terminology.

The identifier of the album can be generated using the event-based clustering information and a pre-stored reference image for an event, and may be at least one of the cover and name of the album.

If the user information is changed, the pre-stored, event-based clustering information can be updated so as to correspond to the changed user information.

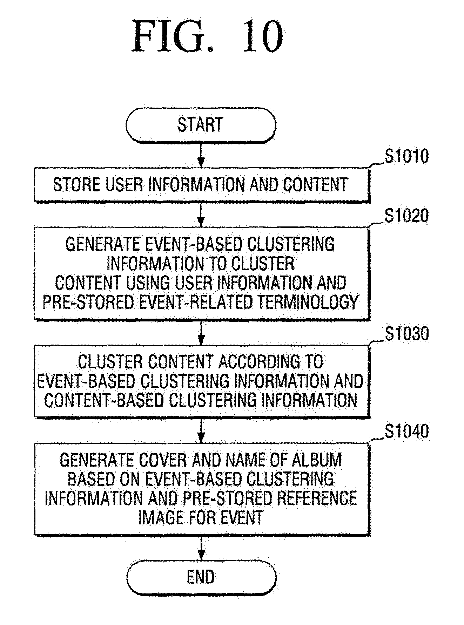

FIG. 10 is a flow chart illustrating the method of albuming content as illustrated in FIG. 9 in greater detail.

Referring to FIG. 10, in operation S1010, if user information and content are stored, in operation S1020, event-based clustering information needed for clustering the content is generated based on the user information and pre-stored event-related terminology. Alternatively, event-based clustering information may be generated based on event-related terminology input by the user. The user information may include information regarding the user's schedule, personal matters, and holidays. The content may include digital pictures and digital movies.

The event-based clustering information may include the name, time, place, and central figure of an event.

The event-related terminology may include schedule terminology, anniversary terminology, and holiday terminology.

In operation S1030, the content is clustered according to the event-based clustering information and the content-based clustering information. The content-based clustering information may include information regarding the generation time or copying time of the content, information regarding the situation in which the content has been generated, and information regarding a person in the content.

Subsequently, in operation S1040, the cover and name of an album are generated based on the event-based clustering information and a pre-stored reference image for an event. A plurality of representative images for the cover of the album may be selected. The background of the cover can be generated based on a reference background image and a template for an event. The pre-stored reference image for the event, and the reference background image and the template for the event indicate an image, a background image, and a template which have been generated by training and represent the event.

In addition, albuming information to express the clustered content as an album can be stored and used. In this case, the albuming information may include the event-based clustering information, the content-based clustering information, and an identifier of the album.

If the user information is changed, the pre-stored event-based clustering information can be updated so as to correspond to the changed user information.

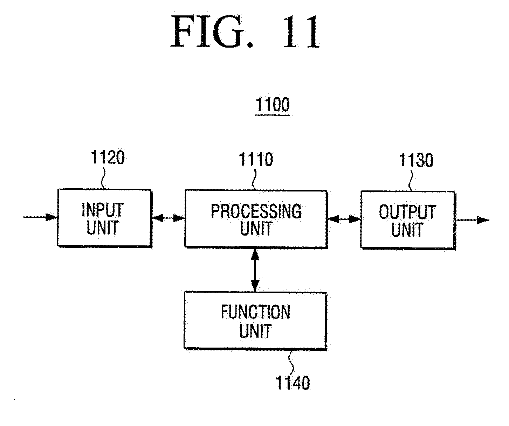

FIG. 11 is a schematic block diagram illustrating an electronic apparatus 1100 according to an exemplary embodiment of the present general inventive concept. The electronic apparatus 1100 can include a processing unit 1110, an input unit 1120, an output unit 1130, and a function unit 1140. The electronic apparatus 1100 can be, for example, a personal computer, a laptop, palmtop, or other portable computing device, a mobile phone, an image processing device, or an image forming device.

The processing unit 1110 can process information according to the present general inventive concept, and can correspond, for example, to the configuration of a content albuming apparatus illustrated in FIGS 1 and 2.

The input unit 1120 can receive input such as, for example, content data, and can communicate the input data with the processing unit 1110. The input unit 1120 can be a component of, can be connected to, or can receive the input from a multimedia device, such as a digital camera, a camcorder, a computer and/or a portable computer, which can generate, store, and use multimedia content. The operations of the input unit 1120 can be controlled by the processing unit 1110.

The output unit 1130 can output information which represents content and/or other information of the present general inventive concept, and can be a component of or can be connected to a device such as, for example, a display device or an image forming device. A display device could display the information for presentation to a user. An image forming device could permit the formation of an image of the information on an image forming medium. The operations of the output unit 1130 can be controlled by the processing unit 1110.

The function unit 1140 is in communication with the processing unit 1110 and can provide, for example, a personal computer function, a mobile device function, and an image forming function. The operations of the function unit 1140 can be controlled by the processing unit 1110. Accordingly the electronic apparatus 1100 can operate as a content albuming apparatus in accordance with the present general inventive concept.

As can be appreciated from the above description of the apparatus and method for automatically albuming content, precision and convenience can be provided.

The present general inventive concept can also be embodied as computer-readable codes on a computer-readable medium. The computer-readable medium can include a computer-readable recording medium and a computer-readable transmission medium. The computer-readable recording medium is any data storage device that can store data which an be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in distributed fashion. The computer-readable transmission medium can transmit carrier waves and signals (e.g., wired or wireless data transmission through the Internet). Also, functional programs, codes, and code segments to accomplish the present general inventive concept can be easily construed by programmers skilled in the art to which the present general inventive concept pertains.

Although various exemplary embodiments of the present general inventive concept have been illustrated and described, it will be appreciated by those skilled in the art that changes may be made in these exemplary embodiments without departing from the principles and spirit of the general inventive concept, the scope of which is defined in the appended claims and their equivalents.

## Claims

1. A content albuming apparatus, comprising:
a storage unit to store user information and content;
a clustering information generation unit to generate event-based clustering information to cluster the content into an album using the user information; and
a clustering unit to cluster the content according to the event-based clustering information.

2. The content albuming apparatus as claimed in claim 1, further comprising:
an albuming information storage unit to store albuming information including the event-based clustering information.

3. The content albuming apparatus as claimed in claim 2, further comprising:
an identifier generation unit to generate an identifier for the album,
wherein the identifier is included in the albuming information.

4. The content albuming apparatus as claimed in any one of claims 1 to 3, wherein the clustering unit performs clustering based on content-based clustering information including at least one of information regarding a generation time or copying time of the content, information regarding a situation in which the content has been generated, and information regarding a focus of the content.

5. The content albuming apparatus as claimed in claim 3, further comprising:
a reference image storage unit to store at least one of a reference image, a reference background image, and a reference template for an event,
wherein the identifier generation unit generates at least one of a cover and a name of the album based on the event-based clustering information and the reference image for the event.

6. The content albuming apparatus as claimed in claim 5, wherein the identifier generation unit selects a background image or a template to be used for the cover of the album based on the reference background image or the reference template for the event.

7. The content albuming apparatus as claimed in any one of claims 1 to 6, further comprising:
a terminology dictionary storage unit to store event-related terminology to cluster the content,
wherein the clustering information generation unit generates the event-based clustering information needed for clustering the contents based on the event-related terminology.

8. The content albuming apparatus as claimed in any one of claims 1 to 7, wherein the user information includes at least one of information regarding a user's schedule, information regarding the user's personal matters, and information regarding holidays.

9. A method of albuming content, the method comprising:
storing user information and content;
generating event-based clustering information to cluster the content using the user information; and
clustering the content into an album according to the event-based clustering information.

10. The method as claimed in claim 9, further comprising:
storing albuming information including the event-based clustering information.

11. The method as claimed in claim 10, further comprising:
generating an identifier for an album,
wherein the identifier is included in the albuming information.

12. The method as claimed in any one of claims 9 to 11, wherein the clustering the content further comprises clustering the content based on content-based clustering information including at least one of information regarding a generation time or copying time of the content, information regarding a situation in which the content has been generated, and information regarding a focus of the content.

13. The method as claimed in claim 11, further comprising:
storing at least one of a reference image, a reference background image, and a reference template for an event,
wherein the generating the identifier further comprises generating at least one of a cover and a name of the album based on at least one of the event-based clustering information and the reference image for the event.

14. The method as claimed in claim 13, wherein the generating the cover of the album further comprises selecting a background image or a template to be used for the cover of the album based on the reference background image or the reference template for the event.

15. The method as claimed in any one of claims 9 to 14, further comprising:
storing event-related terminology needed for clustering the content,
wherein the generating the event-based clustering information further comprises generating the event-based clustering information based on the event-related terminology,
